# EUROPEAN PATENT APPLICATION

(11) **EP 4 814 697 A1**
(43) Date of publication of application: **30.09.2026**
(21) Application number: 26164902.4
(22) Date of filing: 16.03.2026
(51) Int. Cl.: G06F 8/65, G06F 9/451

(54) **COMMUNICATION APPARATUS, CONTROL METHOD THEREFOR, AND PROGRAM**

(30) Priority: 24.03.2025 JP 2025049060
(71) Applicant: CANON KABUSHIKI KAISHA, Ohta-ku Tokyo 146-8501 (JP)
(72) Inventor: SUNAMI, Ryosuke, Ohta-ku, Tokyo 146-8501 (JP)
(74) Representative: TBK

(57) **Abstract**

A communication apparatus, has a communication unit and a display. The apparatus determines whether a transmission target image file that is a target of transmission by the communication unit exists, and controls, in a case where the transmission target image file exists, the display so as not to display a firmware update notification for the communication apparatus.

## Description

### TECHNICAL FIELD

A technique of the present disclosure relates to a communication apparatus, a control method for the communication apparatus, and a program.

### BACKGROUND

Conventionally, a technique is known for receiving latest firmware from a server that manages firmware of a communication apparatus via a network, and updating the firmware of the communication apparatus with use of the received firmware. Also, a technique is known in which a communication apparatus connects to a server that manages firmware versions thereof, checks whether a latest firmware version for updating the communication apparatus is available, and issues a firmware update notification if a latest firmware version is available (see Japanese Patent Laid-Open No. 2022-125869). This allows a user to see the firmware update notification on a screen or the like and recognize that the unapplied latest firmware is available. Furthermore, the latest firmware can be received via a network, and the firmware of the communication apparatus can be updated.

Also, a technique is known that connects to a server that manages image files, and transmits image files stored in a communication apparatus via a network (see Japanese Patent Laid-Open No. 2010-74239).

### SUMMARY

However, with the conventional techniques disclosed in the aforementioned patent documents, a firmware update notification can possibly be displayed during transmission of image files. If a firmware update notification is displayed during transmission of image files, the user sees the firmware update notification and recognizes that latest firmware that has not been applied to the communication apparatus is available, even though the transmission of the image files has not been completed. In this case, there is a possibility that the user starts to update the firmware during transmission of the image files, as a result of displaying the firmware update notification during transmission of the image files. Since the transmission of the image files is suspended upon starting the updating of the firmware, there is a possibility that the user mistakenly thinks that the transmission of the image files was completed even when the transmission of the image files has not been actually completed.

In view of this, the present disclosure aims to provide a technique that can prevent the updating of firmware during transmission of an image file.

The present disclosure in its first aspect provides a communication apparatus as specified in claim 1. Optional features are specified in claim 2 to 9.

The present disclosure in its second aspect provides a program as specified in claim 10.

The present disclosure in its third aspect provides a control method as specified in claim 11.

According to the aforementioned configuration, a technique that can prevent updating of firmware during transmission of an image file can be provided.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1A is a block diagram showing a configuration of a digital camera in the present embodiments.
Fig. 1B is a front view of the digital camera in the present embodiments.
Fig. 1C is a back view of the digital camera in the present embodiments.
Fig. 2 is a block diagram showing a configuration of a server in the present embodiments.
Fig. 3 is a diagram of a system configuration including the digital camera and servers in the present embodiments.
Fig. 4 is an external view showing a screen of the digital camera in the present embodiments.
Fig. 5 is a sequence diagram showing processing of the digital camera and servers in a first embodiment.
Fig. 6A and Fig. 6B illustrate a flowchart showing processing of the digital camera in the first embodiment.
Fig. 7Ais a sequence diagram showing processing of the digital camera and servers in a second embodiment.
Fig. 7B is a sequence diagram showing processing of the digital camera and servers in the second embodiment (continuation).
Fig. 8 is a flowchart showing processing of the digital camera in the second embodiment.
Fig. 9A is a flowchart showing processing of the digital camera in a modification example of the embodiments.
Fig. 9B is a flowchart showing processing of the digital camera in a modification example of the embodiments.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <Configuration of Digital Camera>

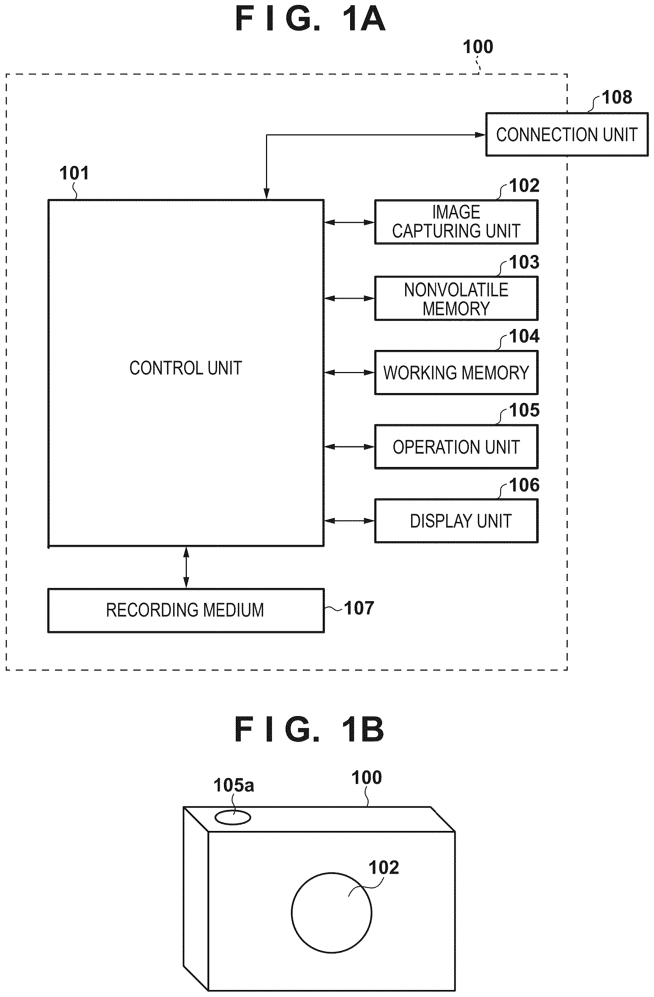

Configurations and the like of apparatuses that are common between first and second embodiments will be described with reference to Figs. 1A to 4.

First, a configuration and functions of a digital camera 100 according to the embodiments will be described with reference to Figs. 1A to 1C. Note that this digital camera 100 has a communication function, and may therefore be referred to as a communication apparatus.

A control unit 101 includes a central processing unit (CPU) that performs integrated control on the entire digital camera 100, and realizes later-described communication processing and control processing by executing programs stored in a later-described nonvolatile memory 103. Note that instead of the control unit 101 controlling the entire apparatus, a plurality of items of hardware may control the entire apparatus by sharing processing.

An image capturing unit 102 includes a lens assembly that has a zoom lens and a focus lens, and a shutter that has a diaphragm function. Also, the image capturing unit 102 includes an image sensor composed of, for example, a CCD or CMOS element that converts a subject image into electrical signals, and an A/D converter that converts analog image signals output from the image sensor into digital signals. Under control of the control unit 101, the image capturing unit 102 converts light of a subject image formed by the lenses included in the image capturing unit 102 into electrical signals with use of the image sensor, executes noise reduction processing and the like, and outputs image data composed of digital signals.

The nonvolatile memory 103 is an electrically erasable and recordable memory; for example, an EEPROM or the like is used thereas. Constants for operations of the control unit 101, programs, and the like are recorded in the nonvolatile memory 103. The programs mentioned here include programs for executing the later-described communication processing and control processing in the present embodiments. Also, each time firmware of the camera 100 has been updated, version information indicating a version of the updated firmware may be stored in the nonvolatile memory 103. In this way, the camera 100 can hold version information of firmware installed therein.

A working memory 104 is used as a working area to which constants and variables for operations of the control unit 101, programs read from the nonvolatile memory 103, and the like are deployed. Also, the working memory 104 is used as a buffer memory that temporarily holds image data captured by the image capturing unit 102, and a memory for image display performed by a display unit 106.

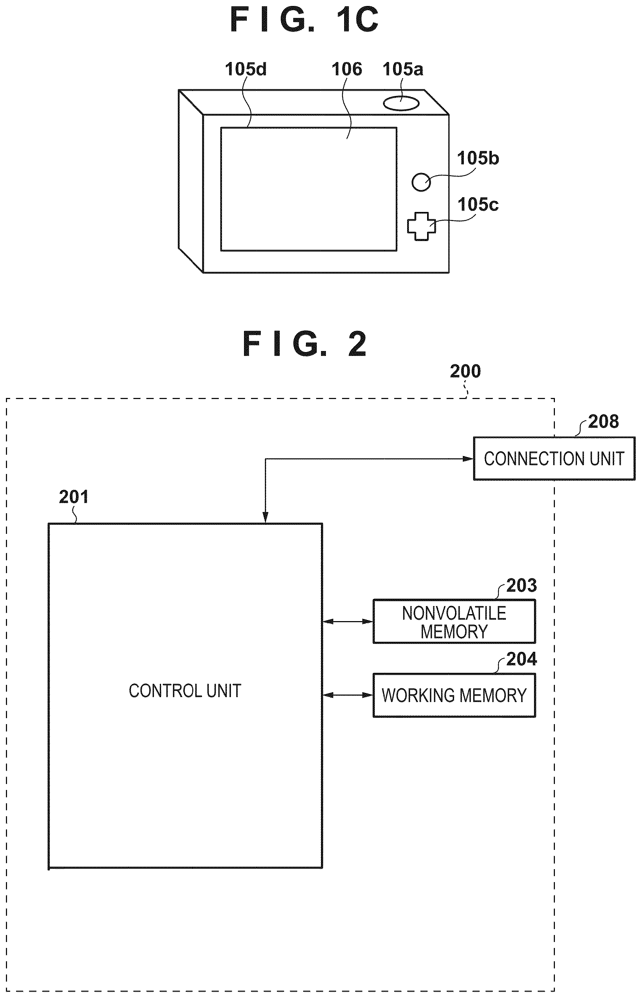

An operation unit 105 is composed of operation members (such as various types of switches, buttons, and a touch panel) that accept various types of operations from a user. For example, as shown in Figs. 1B and 1C, the operation unit 105 includes a shutter button 105a for shooting images, a reproduction button 105b that reproduces captured images, a four-direction key 105c composed of up, down, left, and right buttons for configuring various types of settings for the camera, and so forth. Also, a touch panel 105d that is integrally formed in the later-described display unit 106 is also included in the operation unit 105. A shutter button 105a is turned ON and generates a first shutter switch signal SW1 halfway through an operation performed thereon, that is to say, when half-pressed (a shooting preparation instruction). Upon receiving the first shutter switch signal SW1, the control unit 101 starts a shooting preparation operation, such as AF processing and AE processing, by controlling the image capturing unit 102. Also, the shutter button 105a is turned ON and generates a second shutter switch signal SW2 upon completion of the operation performed thereon, that is to say, when fully pressed (a shooting instruction). Upon receiving the second shutter switch signal SW2, the control unit 101 starts a sequence of operations of shooting processing, from readout of signals from the image capturing unit 102 to writing of image data to a recording medium 107.

The display unit 106 displays viewfinder images at the time of shooting, displays captured images, and displays characters for an interactive operation, for example. The display unit 106 is, for example, a display device, such as a liquid crystal display and an organic EL display. The display unit 106 may be configured to be integral with the digital camera 100, or may be an external apparatus connected to the digital camera 100. It is sufficient for the digital camera 100 to be capable of connecting to the display unit 106, and to have a function of controlling display performed by the display unit 106.

Image data output from the image capturing unit 102 is recorded in the recording medium 107, or an image file that has already been recorded is read out from the recording medium 107 by the control unit 101. The recording medium 107 may be, for example, a memory card or a hard disk drive attached to the digital camera 100, or may be a flash memory or a hard disk drive built in the digital camera 100. It is sufficient for the digital camera 100 to include at least means for accessing the recording medium 107.

A connection unit 108 is an interface for connecting to an external apparatus, such as a later-described server 200, in such a manner that communication can be performed therewith. The digital camera 100 of the present embodiments can transmit/receive (or communicate) data to/from the external apparatus via the connection unit 108. For example, the digital camera 100 can transmit an image file to the external apparatus via the connection unit 108, or receive firmware version information and firmware of this version from the external apparatus via the connection unit 108. Firmware version information is information indicating a version of firmware, and is, for example, a version number. Note that in the present embodiments, the connection unit 108 includes an interface for performing wireless LAN communication with the external apparatus in conformity with the IEEE 802.11 standard. The control unit 101 realizes wireless communication with the external apparatus by controlling the connection unit 108. Note that a communication method is not limited to a wireless LAN; for example, wired LAN communication may be used.

### <Configuration of Server>

A configuration and functions of the server 200 of the present embodiments will be described with reference to Fig. 2. Note that, although a server according to the embodiments is a file management server or a firmware version management server, either way it has the configuration of the server 200 shown in Fig. 2.

A control unit 201 is a central processing unit (CPU) that performs integrated control on the entire server 200, and realizes later-described communication processing and control processing by executing programs stored in a later-described nonvolatile memory 203. Note that instead of the control unit 201 controlling the entire apparatus, a plurality of items of hardware may control the entire apparatus by sharing processing.

The nonvolatile memory 203 is an electrically erasable and recordable memory; for example, an EEPROM or the like is used thereas. Constants for operations of the control unit 201, programs, and the like are recorded in the nonvolatile memory 203. The programs mentioned here denote programs for executing the later-described communication processing and control processing in the present embodiments.

A working memory 204 is used as a working area to which constants and variables for operations of the control unit 201, programs read from the nonvolatile memory 203, and the like are deployed.

A connection unit 208 is an interface for connecting to an external apparatus, such as the digital camera 100, in such a manner that communication can be performed therewith. The server 200 of the present embodiments can transmit/receive data to/from communication apparatuses, including the digital camera 100, via the connection unit 208. For example, the server 200 can transmit firmware version information to a communication apparatus via the connection unit 208, or receive an image file from an external apparatus via the connection unit 208. The control unit 201 realizes communication with an external apparatus by controlling the connection unit 208.

### <System Configuration Including Digital Camera and Server>

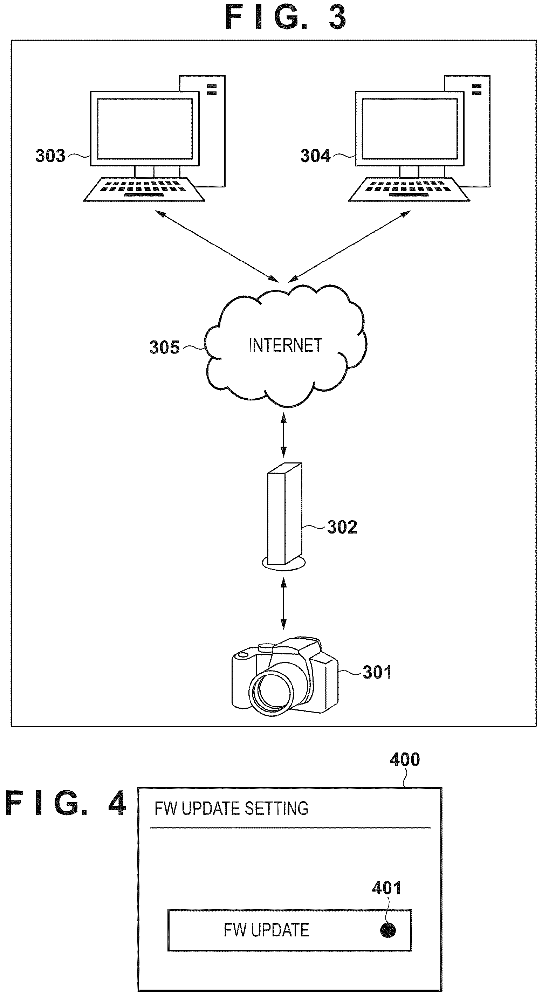

Next, a system configuration including the digital camera 100 and the server 200 of the present embodiments will be described with reference to FIG. 3. Fig. 3 is a diagram of a system configuration including the digital camera 100 and the server 200. A system includes a camera 301 that is a communication apparatus, an access point 302 that is an access point, an image file management server 303 that is an external apparatus, and a firmware version management server 304 that is an external apparatus.

The camera 301 is a camera that is configured in a manner similar to the digital camera 100. Also, the camera 301 communicates with the access point 302 via the connection unit 108. Also, the camera 301 communicates with the image file management server 303 via the access point 302. Also, the camera 301 transmits an image file to the image file management server 303 via a later-described public network 305. Also, the camera 301 communicates with the firmware version management server 304 via the access point 302. Also, the camera 301 receives firmware version information from the firmware version management server 304 via the public network 305. Also, when updating firmware, the camera 301 receives a firmware version from the firmware version management server 304 or another server via the public network 305. Furthermore, the camera 301 has a function of, after a power source has been turned ON, transmitting an untransmitted image file to the image file management server 303 if this image file is included in image files to be transmitted. An image file may be transmitted in response to a user's instruction, or automatically between shooting sessions. Also, regarding an image file to be transmitted, information indicating that this image file is to be transmitted may be appended thereto. Regarding a transmitted image file, information indicating that this image file has been transmitted may be appended thereto. Alternatively, the transmitted image file may be deleted from the recording medium. Alternatively, in a case where the transmitted image file is basically deleted but an image file to be left in the recording medium can be designated, information indicating a transmitted state may be held with respect to the image file to be left. This makes it possible to specify an untransmitted image file on the camera 301.

The access point 302 is an access point that mediates communication between the camera 301 and the image file management server 303. Also, the access point 302 is an access point that mediates communication between the camera 301 and the firmware version management server 304.

The image file management server 303 is a server that is configured in a manner similar to the server 200 and manages image files. Also, the image file management server 303 can perform an operation of, for example, viewing images with respect to image files that were transmitted by the user with use of the camera 301. Also, the image file management server 303 communicates with the camera 301 via the access point 302. Also, the image file management server 303 receives image files from the camera 301 via the public network 305.

The firmware version management server 304 is a server that is configured in a manner similar to the server 200 and manages firmware versions. Also, the firmware version management server 304 is a server that holds latest firmware version information of each camera model in an Extensible Markup Language (XML) file. Also, the firmware version management server 304 communicates with the camera 301 via the access point 302. Also, the firmware version management server 304 transmits firmware version information to the camera 301 via the public network 305. Note that the image file management server 303 and the firmware version management server 304 may be configured to communicate with the camera 301 while being configured as one server.

The public network 305 represents communication lines that are provided for communication of a large number of unspecified users. Also, the public network 305 is a network for performing communication between the camera 301 and the image file management server 303 via the access point 302. Also, the public network 305 is a network for performing communication between the camera 301 and the firmware version management server 304 via the access point 302.

### <Screen Displayed on Digital Camera>

Next, a screen displayed on the camera 301 of the present embodiments will be described with reference to Fig. 4. Fig. 4 is a screen diagram showing a screen displayed on the camera 301.

A firmware update setting screen 400 is a screen that is displayed by the control unit 101 of the camera 301 to provide a user with an opportunity to update firmware. Also, the firmware update setting screen 400 is displayed on the display unit 106 of the camera 301. Note that a firmware update may be referred to as an FW update, and a firmware update notification may be referred to as an FW update notification. Note that FW is an abbreviation for firmware.

A firmware update notification 401 is a notification that is displayed by the control unit 101 of the camera 301 to indicate that the user can perform a firmware update on the camera 301. Also, the firmware update notification 401 is a notification that is displayed when the control unit 101 of the camera 301 has connected to the firmware version management server 304 and confirmed that the latest firmware version has not been applied to the camera 301. In other words, the firmware update notification 401 is a notification that is displayed when the firmware of the camera 301 is not the latest version. Here, not having been applied to the camera 301 means not being installed in the camera 301. Also, the latest firmware version is the latest version of items of firmware to be installed in the camera 301. Therefore, to confirm that the latest firmware version has not been applied to the camera 301, latest firmware version information intended for the camera 301 is obtained from, for example, the firmware version management server 304. Then, the latest firmware version information is compared with firmware version information installed in the camera 301; this makes it possible to confirm that the latest firmware version has not been applied to the camera 301. If the firmware version information obtained from the firmware version management server 304 is newer than the firmware version information installed in the camera 301 as a result of the comparison, it can be confirmed that the firmware of the obtained version is a firmware version not yet applied to the camera 301. That is to say, it can be confirmed that the firmware of the camera 301 is not the latest. Regarding version information of the firmware version installed in the camera 301, it is sufficient to store this version information by, for example, storing this version information to the nonvolatile memory 103 each time the camera 301 has updated the firmware.

By confirming the display of the firmware update notification 401, the user can acknowledge that there is latest firmware that has not been installed, that is to say, has not been applied, and perform an update to the latest firmware via the network. Also, the firmware update notification 401 is a notification that the control unit 101 of camera 301 hides without displaying, when the control unit 101 of the camera 301 has connected to the firmware version management server 304 and confirmed that an unapplied firmware version does not exist. Also, when the firmware update notification 401 is not displayed, or is hidden, by the control unit 101 of the camera 301, the user is not provided with means for updating the firmware, such as an operation screen and the like, and cannot update the firmware. Note that the firmware update notification 401 is not limited to the presentation of the firmware update notification 401 of the present embodiments. It may be displayed in a different presentation; for example, the shape of the firmware update notification 401 may be changed, or the size of the firmware update notification 401 may be changed. Furthermore, a display screen that displays the firmware update notification 401 is not limited to the firmware update setting screen 400, and the notification may be displayed on a display screen different from the firmware update setting screen 400. Moreover, the number of firmware update notifications 401 that are displayed is not limited to one, and a plurality of them may be displayed on a display screen.

### (First Embodiment)

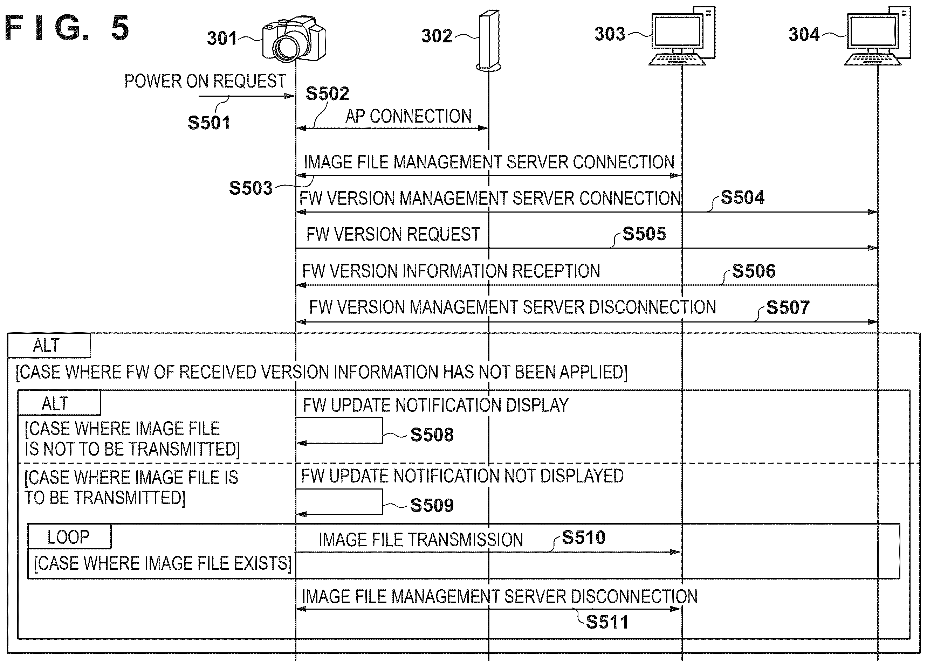

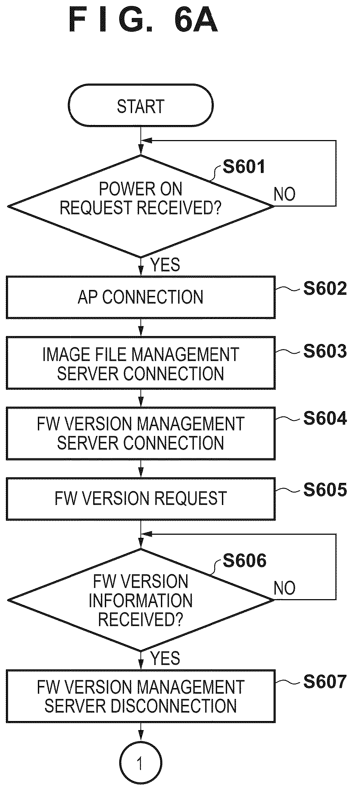

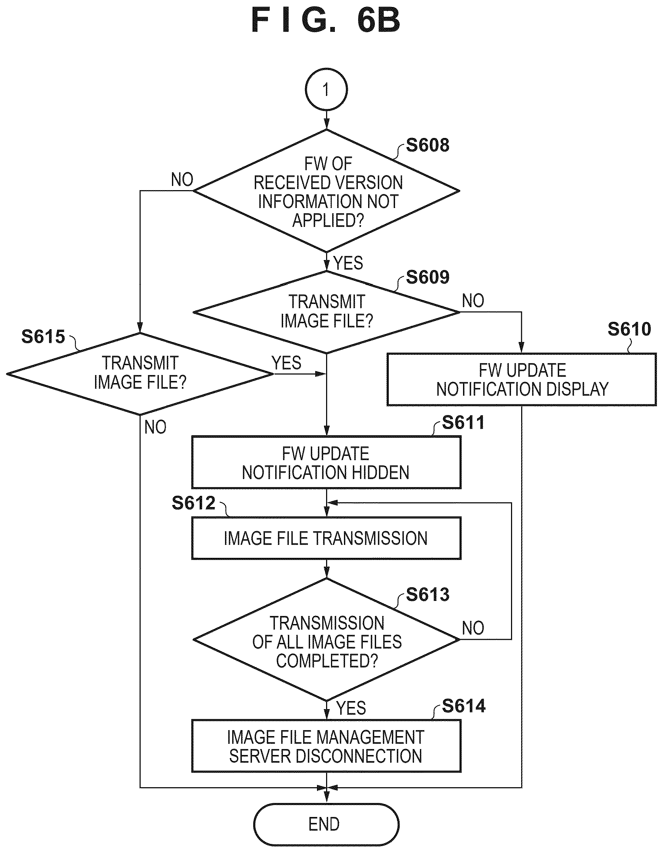

With reference to Figs. 5 and 6, the following describes a technique that can prevent a firmware update during transmission of an image file according to the first embodiment.

### <Processing Sequence of Digital Camera and Server>

Next, a processing sequence of the digital camera and servers of the first embodiment will be described with reference to Fig. 5. In this sequence, after the power source has been turned ON, if there is an image file that has not been transmitted to the image file management server 303, the camera 301 transmits this image file. Processing by the camera 301 and each server is realized by their respective control units, especially CPUs, executing programs stored in their respective memories, such as nonvolatile memories, or programs loaded in the working memories.

In step S501, the control unit 101 of the camera 301 accepts an instruction for turning ON the power source of the camera 301 from a user via the operation unit 105. Here, when the operation unit 105 has been operated, the control unit 101 of the camera 301 determines that the instruction for turning ON the power source of the camera 301 has been accepted from the user.

In step S502, the control unit 101 of the camera 301 establishes communication with the access point 302 via the connection unit 108. Here, in order to establish communication with the access point 302 via the connection unit 108, the control unit 101 of the camera 301 establishes a connection with use of communication settings, which have been set by the user in advance and which are a combination of an SSID and a password of the access point 302. Note that in order to establish communication with the access point 302 via the connection unit 108, the control unit 101 of the camera 301 may make connection with use of communication settings under which communication was previously established with the access point 302.

In step S503, in response to establishment of communication with the access point 302, the control unit 101 of the camera 301 establishes communication with the image file management server 303 via the connection unit 108. Here, in order to establish communication with the image file management server 303 via the connection unit 108, the control unit 101 of the camera 301 establishes a connection with use of communication settings which have been set by the user in advance and which indicate an address of the image file management server 303. Furthermore, authentication information for accessing the image file management server 303 may also be used as needed.

In step S504, in response to establishment of communication with the image file management server 303, the control unit 101 of the camera 301 establishes communication with the firmware version management server 304 via the connection unit 108. Here, in order to establish communication with the firmware version management server 304, the control unit 101 of the camera 301 establishes a connection with use of a URL which has been stored in the nonvolatile memory 103 in advance and which indicates an address of the firmware version management server 304. Furthermore, authentication information for accessing the firmware version management server 304 may also be used as needed.

In step S505, the control unit 101 of the camera 301 transmits a firmware version request to the firmware version management server 304 via the connection unit 108. Here, the control unit 101 of the camera 301 can receive and check firmware version information by providing a trigger for receiving the firmware version information from the firmware version management server 304 via the connection unit 108.

In response to the firmware version request, the control unit 201 of the firmware version management server 304 transmits the firmware version information to the camera 301 via the connection unit 208. The firmware version information that is transmitted by the firmware version management server 304 as a response to the request may be version information of the latest firmware that is managed by the firmware version management server 304 and corresponds to a request source device (the camera 301 in the present example). Also, the transmitted firmware version information may be, for example, an XML file.

In step S506, the control unit 101 of the camera 301 receives the firmware version information from the firmware version management server 304 via the connection unit 108. Here, the control unit 101 of the camera 301 receives an XML file from the firmware version management server 304 via the connection unit 108, and obtains a character string defined by a tag indicating the firmware version information as the firmware version information from the XML file. Note that the firmware version information may be received as a character string from the firmware version management server 304 via the connection unit 108.

In step S507, the control unit 101 of the camera 301 disconnects communication with the firmware version management server 304 via the connection unit 108.

In step S508, in a case where it is necessary to update the firmware and an image file is not to be transmitted to the image file management server 303, the control unit 101 of the camera 301 displays the firmware update notification 401 on the display unit 106. A case where it is necessary to update the firmware is, for example, a case where the received latest firmware version information indicates a version newer than the version of firmware installed in the camera 301. Also, a case where an image file is not to be transmitted to the image file management server 303 is, for example, a case where image files stored in the recording medium 107 of the camera 301 do not include an image file in a transmission standby state where transmission thereof to the image file management server 303 is on standby. The image file in the transmission standby state is, for example, an untransmitted image file among image files to be transmitted. The image files to be transmitted may be all captured image files, or may be image files selected from among the captured image files.

In a case where it is necessary to update the firmware and an image file is not to be transmitted to the image file management server 303, the firmware update notification 401 is displayed on the firmware update setting screen 400. That is to say, in this case, when the user has operated the operation unit 105 so as to display the firmware update setting screen 400, the control unit 101 of the camera 301 displays, on the display unit 106, the firmware update setting screen 400 on which the firmware update notification 401 is displayed. Note that in this case, the firmware update setting screen 400 including the firmware update notification 401 may be displayed even in the absence of a user operation.

In step S509, in a case where it is necessary to update the firmware but an image file is to be transmitted to the image file management server 303, the control unit 101 of the camera 301 does not display the firmware update notification 401 when displaying the firmware update setting screen 400. That is to say, it hides the firmware update notification 401 even when the user has performed an operation so as to display the firmware update setting screen 400. In this case, hiding the firmware update notification 401 deprives the user of the opportunity to update the firmware at the stage where transmission of an image file is scheduled, and even if the image file is transmitted, a firmware update during the transmission can be prevented.

Note that it is permissible to provide update notification display information for setting whether to display the firmware update notification 401 on the firmware update setting screen 400, set the notification to be displayed in step S508, and set the notification to be hidden in step S509. Then, when displaying the firmware update setting screen 400, the firmware update notification 401 may be displayed when it is set to be displayed, and the firmware update notification 401 may be hidden when it is set to be hidden, with reference to this update notification display information. When the firmware has been updated, this update notification display information may be set to hide the notification.

In step S510, in a case where there is an image file to be transmitted to the image file management server 303, the control unit 101 of the camera 301 transmits the image file to the image file management server 303 via the connection unit 108. Also, after the image file has been transmitted to the image file management server 303 via the connection unit 108, if there is another image file to be transmitted to the image file management server 303, the control unit 101 of the camera 301 transmits this image file to the image file management server 303.

Note that, after the image file has been transmitted to the image file management server 303 via the connection unit 108, the control unit 101 of the camera 301 may display the firmware update notification 401 on the display unit 106. Also, in order to display the firmware update notification 401 on the display unit 106, the control unit 101 of the camera 301 may establish communication with the image file management server 303 via the connection unit 108 again and check the firmware version information. Furthermore, the control unit 101 of the camera 301 may store the received firmware version information, and display the firmware update notification 401 on the display unit 106 when the firmware version indicated thereby has not been applied to the camera 301.

In step S511, the control unit 101 of the camera 301 disconnects communication with the image file management server 303 via the connection unit 108.

Note that although omitted in Fig. 5, when the firmware version indicated by the received version information has been applied to the camera 301, an image file to be transmitted may be transmitted, if any. In this case, as the firmware update is unnecessary, the firmware update notification 401 may be hidden. Also, when the firmware version indicated by the received version information has not been applied to the camera 301, the latest firmware version is downloaded from the firmware version management server 304 or another server to the camera 301 and installed in response to, for example, a user operation. The download is performed via the connection unit 108.

### <Processing Flow of Digital Camera>

Next, a processing flow of the digital camera 301 of the first embodiment will be described with reference to Figs. 6A and 6B. Processing of Figs. 6A and 6B is realized by the control unit 101, especially the CPU, of the camera 301 executing programs stored in the memory thereof, such as the nonvolatile memory, or programs loaded in the working memory. Note that the matters that have already been described using Fig. 5 may be described in a simplified manner.

In step S601, the control unit 101 of the camera 301 determines whether an instruction for turning ON the power source has been accepted from a user. When the control unit 101 has determined that the instruction for turning ON the power source has been accepted from the user, processing proceeds to step S602. When the control unit 101 has determined that the instruction for turning ON the power source has not been accepted from the user, processing of step S601 is repeated. Processing of step S601 is equivalent to step S501 of Fig. 5.

In step S602, the control unit 101 of the camera 301 establishes communication with the access point 302 via the connection unit 108. Processing of step S602 is equivalent to step S502 of Fig. 5.

In step S603, the control unit 101 of the camera 301 establishes communication with the image file management server 303 via the connection unit 108. Processing of step S603 is equivalent to step S503 of Fig. 5.

In step S604, the control unit 101 of the camera 301 establishes communication with the firmware version management server 304 via the connection unit 108. Processing of step S604 is equivalent to step S504 of Fig. 5.

In step S605, the control unit 101 of the camera 301 transmits a firmware version request to the firmware version management server 304 via the connection unit 108. Processing of step S605 is equivalent to step S505 of Fig. 5.

In step S606, the control unit 101 of the camera 301 determines whether firmware version information has been received via the connection unit 108. When the control unit 101 has determined that the firmware version information has been received via the connection unit 108, processing proceeds to step S607. When the control unit 101 has determined that the firmware version information has not been received via the connection unit 108, processing of step S606 is repeated. Processing of step S606 is equivalent to step S506 of Fig. 5.

In step S607, the control unit 101 of the camera 301 disconnects communication with the firmware version management server 304 via the connection unit 108. Processing of step S607 is equivalent to step S507 of Fig. 5.

In step S608, the control unit 101 of the camera 301 determines whether firmware of the received firmware version information has been installed in the camera 301. That is to say, whether the firmware installed in the camera 301 is the latest version is determined. When the control unit 101 has determined that the firmware version indicated by the received firmware version information has not been installed in the camera 301, processing proceeds to step S609. When the control unit 101 has determined that the firmware indicated by the received firmware version information has been installed in the camera 301, processing proceeds to step S615.

In step S609, the control unit 101 of the camera 301 determines whether an image file is to be transmitted via the connection unit 108. When the control unit 101 has determined that an image file is to be transmitted via the connection unit 108, processing proceeds to step S611. When the control unit 101 has determined that an image file is not to be transmitted via the connection unit 108, processing proceeds to step S610. A case where an image file is to be transmitted is, for example, a case where an image file that has not been transmitted to the image file management server 303 exists in the recording medium 107.

In step S610, the control unit 101 of the camera 301 displays the firmware update notification 401. Processing of step S610 is equivalent to step S508 of Fig. 5. Here, similarly to the first embodiment, information indicating that the firmware update notification 401 is to be displayed may be set.

In step S611, the control unit 101 of the camera 301 does not display, or hides, the firmware update notification 401. Here, similarly to the first embodiment, information indicating that the firmware update notification 401 is to be hidden may be set. As the control unit 101 of the camera 301 does not display, or hides, the firmware update notification 401, the user is deprived of the opportunity to update the firmware at this stage, that is to say, in a state where transmission of the image file is scheduled. Processing of step S611 is equivalent to step S509 of Fig. 5.

In step S612, the control unit 101 of the camera 301 transmits the image file via the connection unit 108. Processing of step S612 is equivalent to step S510 of Fig. 5.

In step S613, the control unit 101 of the camera 301 determines whether transmission of all of the image files to be transmitted has been completed. When the control unit 101 has determined that transmission of all of the image files to be transmitted has been completed, processing proceeds to step S614. When the control unit 101 has determined that transmission of all of the image files to be transmitted has not been completed, processing proceeds to step S612.

In step S614, the control unit 101 of the camera 301 disconnects communication with the image file management server 303 via the connection unit 108. Processing of step S614 is equivalent to step S511 of Fig. 5.

In step S615, the control unit 101 of the camera 301 determines whether an image file is to be transmitted via the connection unit 108. When the control unit 101 has determined that an image file is to be transmitted via the connection unit 108, processing proceeds to step S611. When it has been determined that an image file to be transmitted does not exist, processing is ended.

According to the first embodiment, when an image file is to be transmitted, the camera does not display, or hides, the firmware update notification. Also, as the camera does not display, or hides, the firmware update notification, a user is deprived of the opportunity to update firmware. This can prevent a firmware update during transmission of an image file. Consequently, neither downloading of firmware, nor installation processing of firmware, is executed.

In this way, transmission of an image file is not suspended by a firmware update, and it is possible to prevent the user from mistakenly considering that the transmission of the image file has been completed even when the transmission of the image file has not been actually completed.

Note that when the firmware version management server 304 manages firmware version information installed in a camera on a per-camera basis, the firmware version management server 304 can determine whether it is necessary to update firmware on a per-camera basis. Therefore, in this case, in response to a firmware version request from the camera 301, the firmware version management server 304 may transmit a response indicating whether it is necessary to update the firmware to the camera. The camera 301 that has received this response may determine whether it is necessary to update the firmware in accordance with the content of the response.

### (Second Embodiment)

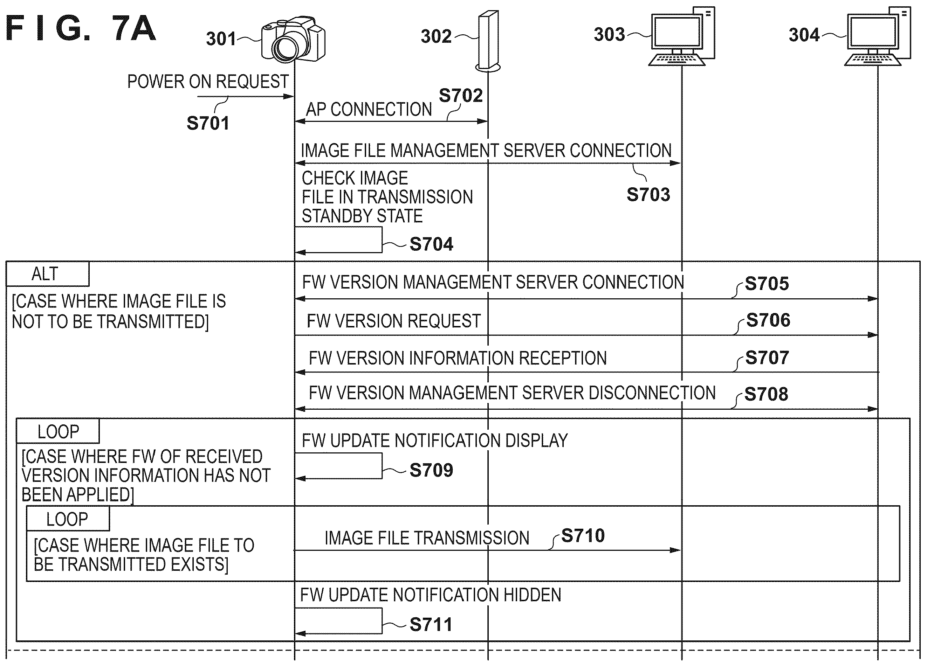

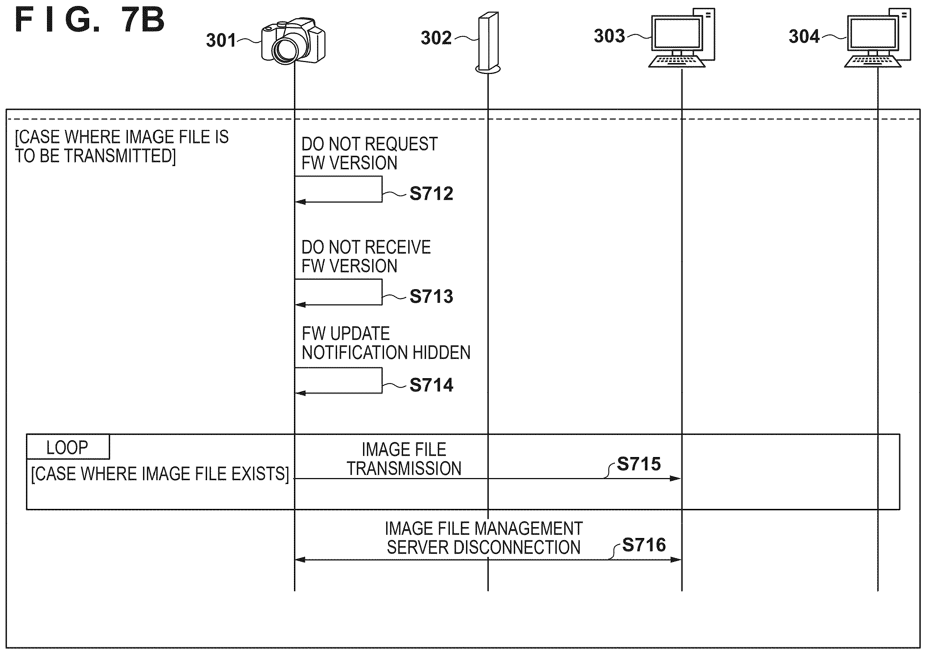

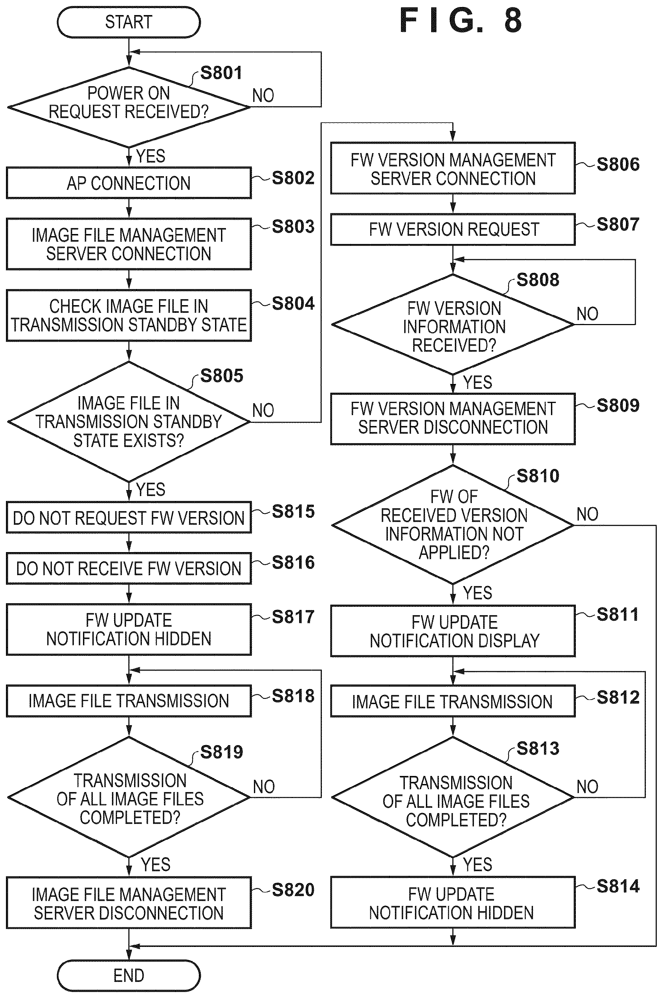

With reference to Figs. 7A, 7B, and 8, the following describes a technique that can prevent a firmware update during transmission of an image file according to the second embodiment. Note that as Figs. 7A and 7B show a continuous sequence, they will be described in a continuous fashion. In this sequence, after the power source has been turned ON, if there is an image file that has not been transmitted to the image file management server 303, the camera 301 transmits this image file. Processing by the camera 301 and each server is realized by their respective control units, especially CPUs, executing programs stored in their respective memories, such as nonvolatile memories, or programs loaded in the working memories.

### <Processing Sequence of Digital Camera and Server>

Next, a processing sequence of the digital camera and servers of the second embodiment will be described with reference to Figs. 7A and 7B.

In step S701, the control unit 101 of the camera 301 accepts an instruction for turning ON the power source of the camera 301 from a user via the operation unit 105. Here, when the operation unit 105 has been operated, the control unit 101 of the camera 301 determines that the instruction for turning ON the power source of the camera 301 has been accepted from the user.

In step S702, the control unit 101 of the camera 301 establishes communication with the access point 302 via the connection unit 108. Here, in order to establish communication with the access point 302 via the connection unit 108, the control unit 101 of the camera 301 establishes a connection with use of communication settings, which have been set by the user in advance and which are a combination of an SSID and a password of the access point 302. Note that in order to establish communication with the access point 302 via the connection unit 108, the control unit 101 of the camera 301 may make connection with use of communication settings under which communication was previously established with the access point 302.

In step S703, in response to establishment of communication with the access point 302, the control unit 101 of the camera 301 establishes communication with the image file management server 303 via the connection unit 108. Here, in order to establish communication with the image file management server 303 via the connection unit 108, the control unit 101 of the camera 301 establishes a connection with use of communication settings which have been set by the user in advance and which indicate an address of the image file management server 303. Furthermore, authentication information that is required to access the image file management server 303 may be used.

In step S704, the control unit 101 of the camera 301 checks an image file in a transmission standby state. Here, the control unit 101 of the camera 301 determines whether an image file in a transmission standby state exists by accessing an image transfer management file stored in the recording medium 107. Note that the control unit 101 of the camera 301 may determine whether an image file in a transmission standby state exists by accessing an image transfer management area stored in the nonvolatile memory 203. Note that the image file in the transmission standby state is, for example, an untransmitted image file among image files to be transmitted. The image files to be transmitted may be all captured image files, or may be image files selected from among the captured image files. When an image file in a transmission standby state does not exist, that is to say, when an image file is not to be transmitted, steps S705 to S711 are executed.

In step S705, in response to establishment of communication with the image file management server 303, the control unit 101 of the camera 301 establishes communication with the firmware version management server 304 via the connection unit 108. In the present embodiment, when an image file in a transmission standby state does not exist in step S704, it is determined that an image file is not to be transmitted. Here, in order to establish communication with the firmware version management server 304, the control unit 101 of the camera 301 establishes a connection with use of a URL which has been stored in the nonvolatile memory 103 in advance and which indicates an address of the firmware version management server 304.

In step S706, the control unit 101 of the camera 301 transmits a firmware version request to the firmware version management server 304 via the connection unit 108. Here, the control unit 101 of the camera 301 can receive and check firmware version information by providing a trigger for receiving the firmware version information from the firmware version management server 304 via the connection unit 108. Also, in response to the firmware version request, the control unit 201 of the firmware version management server 304 transmits the firmware version information to the camera 301 via the connection unit 208.

In step S707, the control unit 101 of the camera 301 receives the firmware version information from the firmware version management server 304 via the connection unit 108. Here, an XML file is received from the firmware version management server 304 via the connection unit 108, and a character string defined by a tag indicating the firmware version information is obtained as the firmware version information from the XML file. Note that the firmware version information may be received as a character string from the firmware version management server 304 via the connection unit 108.

In step S708, the control unit 101 of the camera 301 disconnects communication with the firmware version management server 304 via the connection unit 108.

Steps S709 to S711 are executed when it has been determined that an image file is not to be transmitted in step S704 and firmware of the version indicated by the received firmware version information has not been applied to the camera 301.

In step S709, the control unit 101 of the camera 301 displays the firmware update notification 401 on the display unit 106. Also, when the user has operated the operation unit 105 so as to display the firmware update setting screen 400, the control unit 101 of the camera 301 displays, on the display unit 106, the firmware update setting screen 400 on which the firmware update notification 401 is displayed.

In step S710, in a case where there is an image file to be transmitted to the image file management server 303, the control unit 101 of the camera 301 transmits the image file to the image file management server 303 via the connection unit 108. A case where there is an image file to be transmitted at this stage is a case where an image file in a transmission standby state, that is to say, an image file to be transmitted, has newly come into existence after it has been determined that an image file to be transmitted does not exist in step S704. A case where an image file to be transmitted has newly come into existence is, for example, a case where the control unit 101 of the camera 301 has accepted an instruction for transmitting an image file to the image file management server 303 from the user via the operation unit 105. Alternatively, this is a case where a new image has been captured and stored as an image file. After the image file has been transmitted to the image file management server 303 via the connection unit 108, if there is another image file to be transmitted to the image file management server 303, the control unit 101 transmits this image file to the image file management server 303 via the connection unit 108. That is to say, even when there is a possibility that the firmware will be updated, if an image file to be transmitted remains, this image file is transmitted in step S710.

In step S711, the control unit 101 of the camera 301 does not display, or hides, the firmware update notification 401. As the control unit 101 of the camera 301 does not display, or hides, the firmware update notification 401, it is possible to deprive the user of the opportunity to update the firmware at this stage.

In step S712, when an image file is to be transmitted to the image file management server 303, the control unit 101 of the camera 301 does not transmit a firmware version request to the firmware version management server 304 via the connection unit 108. Here, the control unit 101 of the camera 301 can refrain from receiving and checking the firmware version information by not providing a trigger for receiving a firmware version from the firmware version management server 304 via the connection unit 108. Also, in the present embodiment, when an image file in a transmission standby state exists in step S704, it is determined that the image file is to be transmitted. Step S712 may be a process in which nothing is performed in particular.

In step S713, when the image file is to be transmitted to the image file management server 303, the control unit 101 of the camera 301 does not receive the firmware version information from the firmware version management server 304 via the connection unit 108. Here, the control unit 101 of the camera 301 can refrain from receiving the firmware version information by not providing a trigger for receiving the firmware version information from the firmware version management server 304 via the connection unit 108. Note that if the firmware version information is not requested in step S712, there will be no response thereto, and hence step S713 may also be a process in which nothing is performed in particular.

In step S714, when the image file is to be transmitted to the image file management server 303, the control unit 101 of the camera 301 does not display, or hides, the firmware update notification 401. As the control unit 101 of the camera 301 does not display, or hides, the firmware update notification 401, it is possible to deprive the user of the opportunity to update the firmware.

When there is an image file to be transmitted to the image file management server 303, the control unit 101 of the camera 301 transmits the image file to the image file management server 303 in step S715. Also, after the image file has been transmitted to the image file management server 303, if there is another image file to be transmitted to the image file management server 303, the control unit 101 of the camera 301 transmits the image file to the image file management server 303.

In step S716, the control unit 101 of the camera 301 disconnects communication with the image file management server 303 via the connection unit 108.

### <Processing Flow of Digital Camera>

Next, a processing flow of the digital camera of the second embodiment will be described with reference to Fig. 8. Processing of Fig. 8 is realized by the control unit 101, especially the CPU, of the camera 301 executing programs stored in the memory thereof, such as the nonvolatile memory, or programs loaded in the working memory. Note that the matters that have already been described using Figs. 7A and 7B may be described in a simplified manner.

In step S801, the control unit 101 of the camera 301 determines whether an instruction for turning ON the power source has been accepted from a user. When the control unit 101 has determined that the instruction for turning ON the power source has been accepted from the user, processing proceeds to step S802. When the control unit 101 has determined that the instruction for turning ON the power source has not been accepted from the user, processing of step S801 is repeated. Processing of step S801 is equivalent to step S701 of Fig. 7A.

In step S802, the control unit 101 of the camera 301 establishes communication with the access point 302 via the connection unit 108. Processing of step S802 is equivalent to step S702 of Fig. 7A.

In step S803, the control unit 101 of the camera 301 establishes communication with the image file management server 303 via the connection unit 108. Processing of step S803 is equivalent to step S703 of Fig. 7A.

In step S804, the control unit 101 of the camera 301 checks an image file in a transmission standby state. Processing of step S804 is equivalent to step S704 of Fig. 7A.

In step S805, the control unit 101 of the camera 301 determines whether an image file is to be transmitted via the connection unit 108. When the control unit 101 has determined that an image file is to be transmitted via the connection unit 108, processing proceeds to step S814. When the control unit 101 has determined that an image file is not to be transmitted via the connection unit 108, processing proceeds to step S806.

In step S806, the control unit 101 of the camera 301 establishes communication with the firmware version management server 304 via the connection unit 108. Processing of step S806 is equivalent to step S705 of Fig. 7A.

In step S807, the control unit 101 of the camera 301 transmits a firmware version request to the firmware version management server 304 via the connection unit 108. Processing of step S807 is equivalent to step S706 of Fig. 7A.

In step S808, the control unit 101 of the camera 301 determines whether firmware version information has been received via the connection unit 108. When the control unit 101 has determined that the firmware version information has been received via the connection unit 108, processing proceeds to step S809. When the control unit 101 has determined that the firmware version information has not been received via the connection unit 108, processing of step S808 is repeated. Processing of step S808 is equivalent to step S707 of Fig. 7A.

In step S809, the control unit 101 of the camera 301 disconnects communication with the firmware version management server 304 via the connection unit 108. Processing of step S809 is equivalent to step S708 of Fig. 7A.

In step S810, the control unit 101 of the camera 301 determines whether the received firmware version information has been installed in the camera 301, that is to say, has been applied thereto. When the control unit 101 has determined that the firmware version indicated by the received firmware version information has not been applied, processing proceeds to step S811. When the control unit 101 has determined that the firmware version indicated by the received firmware version information has been applied, processing is ended.

In step S811, the control unit 101 of the camera 301 displays the firmware update notification 401. Processing of step S811 is equivalent to step S709 of Fig. 7A.

In step S812, the control unit 101 of the camera 301 transmits the image file via the connection unit 108. Processing of step S812 is equivalent to step S710 of Fig. 7A. That is to say, the image file transmitted here is an image file in a transmission standby state, that is to say, an image file to be transmitted, which has been newly added after it has been determined that an image file in a transmission standby state does not exist in step S805. This is, for example, an image file that has been selected as a transmission target by the user, an image file of an image that has been newly captured, or the like after step S805. That is to say, even when there is a possibility that the firmware will be updated, if an image file to be transmitted remains, this image file is transmitted in step S812.

In step S813, the control unit 101 of the camera 301 determines whether transmission of all of the image files to be transmitted has been completed. When the control unit 101 has determined that transmission of all of the image files to be transmitted has been completed, processing proceeds to step S814. When the control unit 101 has determined that transmission of all of the image files to be transmitted has not been completed, processing proceeds to step S812.

In step S814, the control unit 101 of the camera 301 does not display, or hides, the firmware update notification 401. By not displaying, or by hiding, the firmware update notification 401, the control unit 101 of the camera 301 deprives the user of the opportunity to update the firmware at this stage. Processing of step S814 is equivalent to step S711 of Fig. 7A.

In step S815, the control unit 101 of the camera 301 does not transmit a firmware version request to the firmware version management server 304 via the connection unit 108. Here, the control unit 101 of the camera 301 can refrain from receiving and checking firmware version information by not providing a trigger for receiving the firmware version information from the firmware version management server 304 via the connection unit 108. Processing of step S815 is equivalent to step S712 of Fig. 7B. Note that as nothing is performed in step S815, this step may be omitted.

In step S816, the control unit 101 of the camera 301 refrains from receiving the firmware version information from the firmware version management server 304 via the connection unit 108. Here, the control unit 101 of the camera 301 can refrain from receiving the firmware version information by not providing a trigger for receiving the firmware version information from the firmware version management server 304 via the connection unit 108. Processing of step S816 is equivalent to step S713 of Fig. 7B. When step S815 is omitted, the firmware version information is not received, and hence step S816 may also be omitted.

In step S817, the control unit 101 of the camera 301 does not display, or hides, the firmware update notification 401. Also, by not displaying, or by hiding, the firmware update notification 401, the control unit 101 of the camera 301 deprives the user of the opportunity to update the firmware at this stage. Processing of step S817 is equivalent to step S714 of Fig. 7B.

In step S818, the control unit 101 of the camera 301 transmits the image file via the connection unit 108. Processing of step S818 is equivalent to step S715 of Fig. 7B.

In step S819, the control unit 101 of the camera 301 determines whether transmission of all of the image files has been completed. When the control unit 101 has determined that transmission of all image files has been completed, processing proceeds to step S820. When the control unit 101 has determined that transmission of all image files has not been completed, processing proceeds to step S818.

In step S820, the control unit 101 of the camera 301 disconnects communication with the image file management server 303 via the connection unit 108. Processing of step S820 is equivalent to step S716 of Fig. 7B.

Note that similarly to the first embodiment, when displaying the firmware update notification in step S811, update notification display information may be set to indicate that the firmware update notification is to be displayed. Also, similarly, when hiding the firmware update notification in steps S814 and S817, the update notification display information may be set to indicate that the firmware update notification is to be hidden. In this case, it is sufficient to refer to the update notification display information when the firmware update setting screen 400 is displayed in response to, for example, a user operation, and display the firmware update notification 401 in accordance with a setting value thereof.

According to the second embodiment, when an image file is to be transmitted, the camera does not display, or hides, the firmware update notification. By not displaying, or by hiding, the firmware update notification, the camera deprives a user of the opportunity to update firmware. Also, when an image file is to be transmitted, the camera does not connect to the firmware version management server, and does not check the firmware version information. In this way, a firmware update (downloading and installation) during transmission of an image file can be prevented, and a processing time period can be shortened as a request for the firmware version information is not made.

### (First Modification Example of Embodiments)

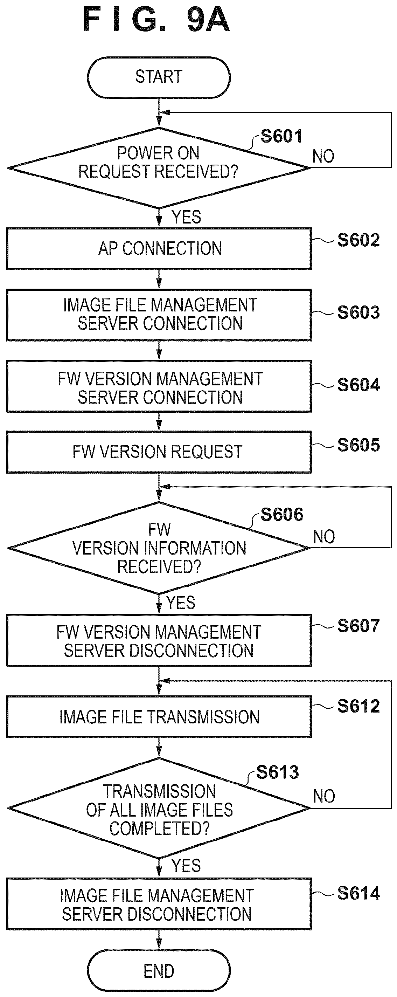

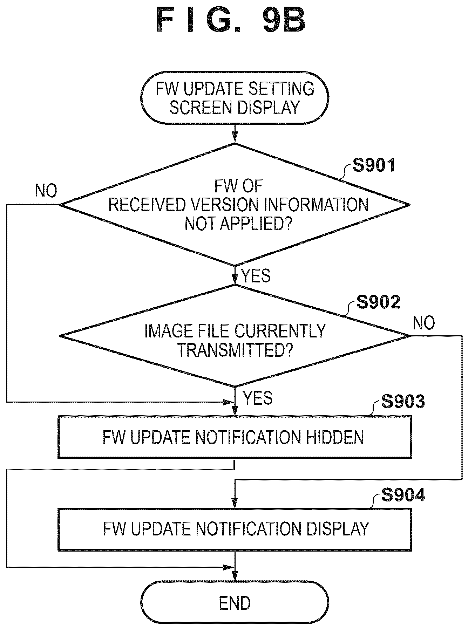

Figs. 9A and 9B show a processing procedure by the camera 301, which is an exemplary embodiment of the first embodiment. Figs. 9A and 9B depict a modification of Figs. 6A and 6B, which is a procedure in which processing from step S608 to step S611 is made independent as processing that corresponds to an operation of displaying the firmware update setting screen 400. In the procedure of Fig. 9A, after the power source has been started, the control unit 101 of the camera 301 that has executed steps S601 to S607 executes transmission of an image file immediately thereafter in steps S612 and S613. Then, connection to the image file management server 303 is cancelled (i.e., disconnected) in step S614, and processing is ended. Note that firmware version information received in step S606 is held to be referred to in Fig. 9B.

On the other hand, the control unit 101 of the camera 301 executes Fig. 9B in response to an operation of displaying the firmware update setting screen 400.

In step S901, the control unit 101 determines whether the firmware version indicated by the firmware version information received in step S606 has not been applied to the camera 301. When it has been determined that the firmware version has not been applied, processing proceeds to step S902. When it has been determined that the firmware version is not an unapplied version, processing proceeds to step S903.

In step S902, the control unit 101 determines whether an image file is currently transmitted at the point where the foregoing determination is made. In contrast, in step S609 of Fig. 6B, whether there is an image file to be transmitted is determined; in this regard, step S902 is different from step S609. A case where an image file is currently transmitted may refer only to a case where the automatic transmission of steps S612 and S613 is currently performed, or may encompass, in addition to this, transmission of an image file that is performed in response to a user operation. Regarding the determination about whether an image file is currently transmitted, it is sufficient to refer to ongoing transmission information; for example, the ongoing transmission information indicating that the image file is currently transmitted is set at the start of transmission, and the setting of the ongoing transmission information is cancelled at the time of completion of transmission. Needless to say, another type of information that makes it possible to determine that the image file is currently transmitted may be referred to.

In step S903, the control unit 101 displays the firmware update setting screen 400 while hiding the firmware update notification 401. Processing is ended here. However, the present description pertains to the firmware update notification 401, and settings of a firmware update may be continued in accordance with a user operation.

In step S904, the control unit 101 displays the firmware update setting screen 400 including the firmware update notification 401. Processing is ended here. However, the present description pertains to the firmware update notification 401, and settings of a firmware update may be continued in accordance with a user operation.

With the foregoing configuration, it is possible to prevent an operation of updating firmware from being performed during actual transmission of an image file. This can prevent transmission of an image file from being interrupted by an update, especially downloading, of the firmware.

### (Second Modification Example of Embodiments)

In the above-described first modification example, the firmware version information is obtained from the firmware version management server 304 immediately after the power source is input. On the other hand, it is permissible to proceed from step S603 to step S612 without executing steps S604 to S607 in Fig. 9A, and transmit an image file immediately after the power source is input. In this case, it is sufficient to execute steps S604 to S607 before step S901 in Fig. 9B. In this way, too, transmission of an image file can be prioritized immediately after the power source is input, and processing for updating firmware can be suppressed during transmission of the image file.

### (Third Modification Example of Embodiments)

In the above-described embodiments and modification examples, in steps S611 and S817, a message indicating that firmware cannot be updated because an image file is currently transmitted may be displayed, rather than displaying the firmware update setting screen on which the firmware update notification is hidden.

Although preferred embodiments have been described above, the present embodiments are not limited to these disclosures, and various types of modifications and changes are possible within the scope of the principles thereof.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus, comprising:
communication means;
display means; and
control means, wherein
the control means
determines whether a transmission target image file that is a target of transmission by the communication unit exists, and
controls, in a case where the transmission target image file exists, the display so as not to display a firmware update notification for the communication apparatus.

2. The communication apparatus according to claim 1, wherein
the transmission target image file is an image file to be transmitted.

3. The communication apparatus according to claim 1 or 2, wherein
the transmission target image file is an image file that is being transmitted.

4. The communication apparatus according to any one of claims 1 to 3, wherein the control means determines whether firmware installed in the communication unit is a latest version, and even in a case of determining that the firmware is not the latest version, if the transmission target image file exists, controlling the display so as not to display the firmware update notification for the communication apparatus.

5. The communication apparatus according to claim 4, wherein the control means
obtains latest version information of firmware corresponding to the communication apparatus with use of the communication unit, and determining whether the firmware installed in the communication apparatus is the latest version by comparing the latest version information with version information of the firmware installed in the communication apparatus.

6. The communication apparatus according to claim 4 or 5, wherein the control means
controls the display so as to display the firmware update notification for the communication apparatus in a case of determining that the transmission target image file does not exist and that the firmware installed in the communication apparatus is not the latest version.

7. The communication apparatus according to any one of claims 1 to 6, wherein the control means
performs control, in a case where the transmission target image file exists, so as not to determine whether firmware installed in the communication apparatus is a latest version.

8. The communication apparatus according to any one of claims 1 to 7, wherein
the firmware update notification is displayed in a firmware update setting screen in response to a user operation for displaying the firmware update setting screen.

9. The communication apparatus according to any one of claims 1 to 8, further comprising
a camera that captures an image and stores the image as an image file.

10. A program that, when loaded in and executed by a computer of a communication apparatus including a communication unit and a display, causes the computer to execute processing, the processing comprising:
determining whether a transmission target image file that is a target of transmission by the communication unit exists; and
in a case where the transmission target image file exists, controlling the display so as not to display a firmware update notification for the communication apparatus.

11. A control method for a communication apparatus including a communication unit and a display, the control method comprising:
determining whether a transmission target image file that is a target of transmission by the communication unit exists; and
in a case where the transmission target image file exists, controlling the display so as not to display a firmware update notification for the communication apparatus.
